# EUROPEAN PATENT APPLICATION

(11) **EP 0 608 016 A1**
(43) Date of publication of application: **27.07.1994**
(21) Application number: 94200051.4
(22) Date of filing: 11.01.1994
(51) Int. Cl.: H05B 41/29, H02M 7/5383

(54) **Driving circuit for bipolar transistors and ballast inverter provided with such circuit**

(30) Priority: 19.01.1993 US 6089
(71) Applicant: Philips Electronics N.V., 5621 BA Eindhoven (NL)
(72) Inventor: Gradzki, Pawel, c/o INT. OCTROOIBUREAU B.V., NL-5656 AA Eindhoven (NL)
(74) Representative: Evers, Johannes Hubertus Maria

(57) **Abstract**

A driving circuit for bipolar transistors suitable for use in a ballast inverter, having a reference voltage device for producing a reference voltage associated with each transistor. A tertiary winding, serving as the base winding for the bipolar transistors, supplies current to the base of each bipolar transistor based on the associated reference voltage. Separate feedback circuits associated with each transistor carry a feedback signal reflecting the minority carrier charge stored in the associated transistor. The reference voltage associated with each transistor varies based on the associated feedback signal.

## Description

This invention relates generally to a driving circuit for bipolar transistors, and more particularly to a circuit for driving a pair of bipolar transistors of a ballast inverter.

Conventional ballast inverters, such as the push-pull type, employ bipolar power transistors having relatively high switching losses when driven into deep saturation during other than maximum load conditions. Switching losses vary based on load conditions imposed on the ballast inverter and are difficult to minimize for all load conditions. The relatively high switching losses also result in the transistors operating at relatively high temperatures which are typically above 60°C. Such relatively high operating temperatures require heat sinks thereby raising the inverter manufacturing cost.

In selecting/designing the base driving circuit for a ballast inverter, characteristics/parameters of the power transistors such as current gain must be carefully chosen for achieving desired ballast operating characteristics. Different types of bipolar transistors can have different characteristics/parameters and therefore cannot be readily substituted for one another for a given base driving circuit.

Significant voltage transients can also appear across the bipolar transistors during turn-on of the lamp ballast. These voltage transients when applied across the bipolar transistors can result in transistor failure.

Conventional ballast inverters also can employ Baker clamps in order to more quickly turn-off the bipolar transistor, that is, to more closely simulate the switching speed of a field effect transistor. The Baker clamp, however, requires use of a relatively expensive high voltage fast recovery diode further increasing power losses.

A typical base driving scheme for a conventional ballast inverter also requires the bipolar transistors have a constant, forced current gain. In other words, the base current is maintained in a fixed relationship relative to the collector or emitter current. Use of such bipolar transistors limitthe range of equivalent bipolar transistors which can be employed within the ballast inverter design, that is, limits standardization of components used within the ballast inverter.

Accordingly, it is desirable to provide an improved driving scheme for bipolar transistors in which relatively high switching losses are avoided resulting in relatively low operating temperatures of the bipolar transistors. The driving scheme should permit a relatively wide range of different bipolar transistors to be used while optimizing (i.e. minimizing) switching losses regardless of load conditions. The driving scheme should also minimize the possibility of relatively large voltage transients appearing across the transistors and avoid the need for Baker clamps in providing relatively high speed switching of the bipolar transistors.

Generally speaking, in accordance with the invention, a driving circuit for bipolar transistors in which each transistor has at least a base and a minority carrier charge includes a reference voltage device for producing a reference voltage associated with each transistor, a current supply for supplying current to the base of each transistor based on the associated reference voltage and a feedback circuit associated with each transistor for varying the reference voltage associated with that transistor based on the minority carrier charge stored in the latter.

By varying the reference voltage associated with each transistor based on the minority carrier charge stored in the latter, each transistor is prevented from being deeply saturated. Switching losses during no- load conditions are therefore minimized. The reduction in the amount of stored minority carriers within each transistor results in switching of each bipolar transistor much more quickly. The switching times of the bipolar transistors approach the switching times of a field effect transistor.

The present invention need not employ Baker clamps in its base driving scheme and therefore avoid the relatively high power losses associated with this clamp. The reduced switching losses also result in the transistors operating at lower temperatures.

The self correcting feedback circuits can maintain the transistors in lightly saturated conductive states. Each feedback circuit is independent of one another. The transistors used in the driving scheme therefore need not have the same operating characteristics. In fact, a wide range of bipolar transistors having different operating characteristics can be employed in the driving scheme of the present invention. In accordance with a feature of the invention, the reference voltage device includes a storage device associated with each transistor. The voltage across the storage device serves as the reference voltage associated with that transistor. Preferably, the storage device is a capacitor.

The feedback circuit includes a switching device associated with each transistor. The switching device is responsive to the conductive state of the associated transistor for controlling when reduction of the associated reference voltage occurs. The switching device and capacitor associated with each transistor are preferably connected in parallel. The level of current supplied to the base of each transistor by the current supply is directly proportional to the associated reference voltage.

In another feature of the invention, the reference voltage device further includes a conduction control device associated with each transistor for controlling the increase of current supplied to the base of and thereby reducing power losses during conduction of that transistor. The conduction control device and storage device associated with each transistor are typically serially connected together.

In accordance with yet another feature of the invention, a stabilizing device associated with each transistor limits decremental variation to only one reference voltage at any instant in time. The stabilizing device and reference voltage device are preferably connected in parallel with each other. The stabilizing device typically includes a diode.

Still other objects and advantages of the invention will, in part, be obvious, and will, in part, be apparent from the specification.

The invention accordingly comprises several steps and a relation of one or more of such steps with respect to each of the others, and the device embodying features of construction, combination of elements and arrangements of parts which are adapted to effect such steps, all is exemplified in the following detailed disclosure, and the scope of the invention will be indicated in the claims.

For a fuller understanding of the invention, reference is had to the following description taken in combination with the accompanying drawings, in which:
Fig. 1 is a schematic diagram of a ballast which includes a bipolar transistor base driving circuit in accordance with one embodiment of the invention; and
Fig. 2 is a schematic diagram of a ballast which includes a bipolar transistor base driving circuit in accordance with an alternative embodiment of the invention.

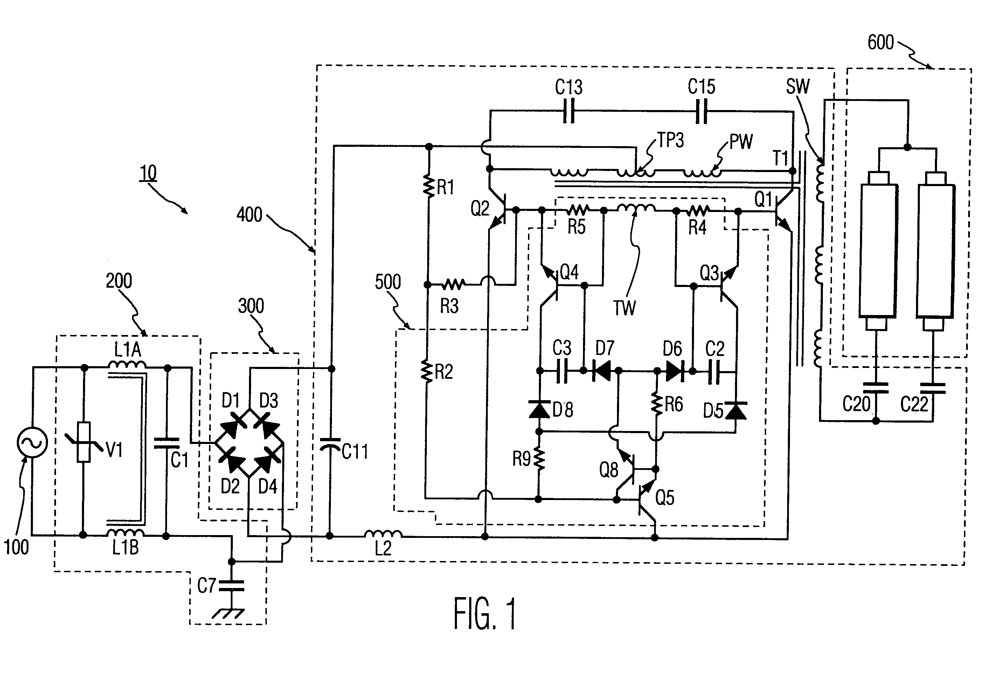

As shown in Fig. 1, a ballast 10, in accordance with a first embodiment of the invention, includes an electromagnetic interference (EMI) filter200 for power factor correction and harmonic content reduction of an a.c. current drawn from an a.c. voltage source 100. Ballast 10 also includes a rectifier 300 for rectifying the filtered a.c. voltage, an inverter400 forcon- verting the rectified a.c. voltage produced by rectifier 300 into a high frequency a.c. voltage. Inverter400 includes a base drive circuit 500 for driving a pair of bipolar power transistors Q1 and Q2 of inverter 400. The high frequency a.c. voltage produced by inverter 400 is supplied to a lamp load 600 for powering of the latter.

EMI filter 200 includes a varistorVI which is connected to a first end of an inductor L1Aand a first end of an inductor Ll B. The other ends of inductors L1A and L1 B are connected to either end of a capacitor C1. A capacitor C7 is connected at one end to the junction between inductor L 1 B and capacitor C1 and at its other end to earth ground (e.g. to a grounded ballast can). The output voltage of filter 200 is produced across capacitor C1 and is then rectified by rectifier 300.

Rectifier 300 includes four diodes D1, D2, D3 and D4. The anode of diode D1 and cathode of diode D2 are connected to the junction between inductor L1A and capacitor C1. The anode of diode D3 and cathode of diode D4 are connected at a first junction joining capacitors C1 and C7 and inductor L1 B together. The cathodes of diodes D1 and D3 are connected together at a second junction. The anodes of diodes D2 and D4 are also connected together. The junctions between the cathodes of diodes D1 and D3 and the anodes of diodes D2 and D4 serve as the outputs of rectifier 300 and are connected to a buffer (e.g. electrolytic) capacitor C11, the latter of which is shown within inverter 400. Alternatively, capacitor C11 can be viewed as part of and across the output of rectifier 300.

Inverter 400, which is of the push-pull oscillator type, also includes an inductor L2 connected at one end to the junction joining capacitor C11 and the anodes of diodes D2 and D4 together. A resistor R1 is connected to the junction joining capacitor C11, the cathodes of diodes D1 and D3 and a center tap TP3 of an inductor PW together. Inductor PW serves as the primary winding of a transformer T1. The other end of resistor R1 is connected to a first end of a resistor R2 and to a first end of a resistor R3. The other end of inductor L2 is connected to an emitter of a bipolar NPN transistor Q2, a collector of an NPN transistor Q5 and an emitter of a bipolar NPN transistor Q1. The other end of resistor R3 is connected to a base of transistor Q2, an emitter of a bipolar NPN transistor Q4 and one end of a resistor R5.

The other end of resistor of R2 is connected to the junction joining a base of transistor Q5, a collector of an NPN transistor Q8 and a resistor R9. The anodes of a pair of diodes D5 and D8 are connected to the other end of resistor R9. The emitter of transistor Q5 is connected to one end of a resistor R6 and a base of transistor Q8. The other end of resistor R6 is connected to the anodes of a pair of diodes D6 and D7 and an emitter of transistor Q8. The cathode of diode D6 is connected to one end of a capacitor C2, a base of a bipolar NPN transistor Q3, one end of an inductor TW and one end of a resistor R4. Inductor TW, which is the tertiary winding of a transformer T1, is commonly referred to as the base winding (i.e. the base winding for supplying power to the bases of transistors Q1 and Q2). The other end of capacitor C2 is connected to the cathode of diode D5 and a collector of transistor Q3. The emitter of transistor Q3 is connected to the other end of resistor R4 and a base of transistor Q1.

The cathode of diode D7 is connected to one end of a capacitor C3, a base of transistor of Q4, the other end of resistor R5 and the other end of tertiary winding TW of transformer T1. The other end of capacitor C3 is connected to the cathode of diode D8 and a collector of transistor Q4. Resistors R2, R4, R5, R6 and R9, diodes D5, D6, D7 and D8, capacitors C2 and C3, tertiary winding TW of transformer T1 and transistors Q3, Q4 and Q8 serve together as base drive circuit 500 for bipolar transistors Q1 and Q2 as further discussed below.

Connected to a collector of transistor Q2 is a first end of a capacitor C13 and a first end of pri mary winding PW. The other end of capacitor C13 is connected to one end of a capacitor C15. The other end of capacitor C15 is connected to a collector of transistor Q1 and the other end of primary winding PW.

A secondary winding SW of transformer T1 is connected at one end to a pair of first ends of a capacitor C20 and a capacitor C22. The other ends of secondary winding SW and capacitors C20 and C22 serve as the outputs for inverter 400 to which lamp load 600 is connected. Lamp load 600 includes a pair of fluorescent lamps LL1 and LL2.

Ballast 10 operates as follows. Varistor V1 serves as a current protection/limiting device for ballast 10. Inductors L1Aand L1B and capacitor C1 serve as a filter for power factor correction and harmonic content reduction of the a.c. current drawn by filter 200 from voltage source 100. Capacitor C7 of filter 200 serves as a common mode capacitor to ground. The output of fitter 200, that is, the voltage across capacitor C1, is supplied to rectifier 300 for rectification of the a.c. voltage across capacitor C1. The rectified a.c. voltage produced by rectifier 300 is stored across buffer (e.g. electrolytic) capacitor C11. The peak voltage across capacitor C1 appears across capacitor C11. The voltage across capacitor C11 serves as the bus voltage for inverter 400. Typically, the bus voltage is about 150 volts or about 345 volts when the voltage applied to filter 200 by voltage source 100 is about 120 volts or about 277 volts, respectively. The bus voltage is applied to center tap TP3 of primary winding PW.

Inductor L2 serves as a current radio frequency choke providing constant current to inverter 400. Capacitors C20 and C22 serve as ballasts for lamps LL1 and LL2, respectively. Typically, the voltage across secondary winding SW oftransformerT1 is about 550 volts RMS; the lamp current flowing through each of capacitors C20 and C22 being approximately 180 milliamperes at steady state full load conditions.

Primary winding PW resonates with capacitors C13 and C15 to produce a desired resonant tank/tuned oscillating frequency. Transistors Q1 and Q2 are switched by base drive circuit 500 for refreshing capacitors C13 and C15 and primary winding PW of the resonant tank circuit.

The ignition scheme for starting the resonant tank circuit (i.e. initiating oscillation) includes resistors R1 and R3. Current flows through resistors R1 and R3 for proper bias of transistors Q1 and Q2 in initiating oscillation of the resonant tank circuit (i.e. for initial switching of transistors Q1 and Q2).

Capacitors C2 and C3 are charged and discharged at different times. There are no periods of time when capacitors C2 and C3 are both charging or when both capacitors C2 and C3 are both discharging. Following discharge, capacitors C2 and C3 are neither charging nor discharging (referred to hereinafter as "idling"). The operational sequence of each capacitor C2 and C3 includes charging (during approximately 1/2 of each oscillation cycle) followed by discharging (during approximately 1/20 of each oscillation cycle) followed by idling (during approximately 1/2 of each oscillation cycle) before repeating the foregoing sequence.

Capacitor C2 begins to charge once transistor Q1 is completely turned OFF and continues to charge until transistor Q2 begins to turn OFF. Current for charging capacitor C2 flows from capacitor C11 through resistors R1, R2 and R9, diode D5, capacitor C2, tertiary winding TW, resistor R5, base-emitter junction of transistor Q2 and inductor L2 before returning to capacitor C11. The forward base current for switching transistor Q2 is based on the voltage across capacitor C2 as further explained below.

Capacitor C3 begins to charge once transistor Q2 is completely turned OFF and continues to charge until transistor Q1 begins to turn OFF. Current for charging of capacitor C3 flows from capacitor C11 through resistors R1, R2 and R9, diode D8, capacitor C3, tertiary winding TW, resistor R4, the base-emitter junction of transistor Q1 and inductor L2 before returning to capacitor C11. The forward base current for transistor Q1 is based on the voltage across capacitor C3 as further explained below.

As transistor Q2 or Q1 is being turned OFF, a large spike or reverse base current from the transistor being turned OFF sufficient for turning ON the other transistor (Q1 or Q2) is sensed by resistor R4 or R5, respectively. The voltage developed across resistor R4 or R5, as transistor Q2 or transistor Q1 begins to turn OFF, is sufficient to turn ON sensing transistors Q3 or Q4, respectively. The reverse base current of transistor Q2 or Q1 now flows, in part, through the emitter-collector path of transistor Q4 or Q3, respectively. For each oscillation of the resonant tank circuit, discharge current from capacitor C3 flows along a path which includes the collector-emitter path of transistor Q4, the base-collector junction of transistor Q2, primary winding PW, the collector-base junction of transistor Q1, resistor R4 and tertiary winding TW before returning to capacitor C3. Similarly, during each oscillation of the resonant tank circuit, discharge current from capacitor C2 flows along a path which includes the collector-emitter path of tran- sistorQ3, base-collector junction of transistor Q1, primary winding PW, collector-base junction of transistor Q2, resistor R5 and tertiary winding TW before returning to capacitor C2.

During one-half of each oscillation cycle of the resonant tuned circuit, capacitor C3 serves to set the voltage across resistor R6. During the other half cycle of oscillation of the resonant tuned circuit, capacitor C2 serves to set the voltage across resistor R6. The voltage across resistor R6 set by capacitor C3 is designed to be approximately equal to the sum of the voltages across capacitor C3 and resistor R9 less the voltage drop across diode D7. Similarly, the voltage developed across resistor R6 during the other half cycle of oscillation is designed to be approximately equal to the sum of the voltages across capacitor C2 and resistor R9 less the voltage drop across diode D6.

During one-half of each oscillation cycle, capacitor C3 controls (i.e. establishes) the voltage developed across and therefore the current flowing through resistor R6. During the other half cycle of each oscillation, capacitor C2 controls (i.e. establishes) the voltage developed across and therefore the current flowing through resistor R6.

Shortly after the resonant tank circuit begins to oscillate, a voltage of sufficiently high amplitude develops across the resonant tank circuit to turn ON transistor Q5. Current for forward biasing of transistor Q2 flows from tertiary winding TW along a path which includes resistor R5, the base-emitter junction of transistor Q2, the collector-emitter path of transistor Q5, resistor R6 and diode D6 before returning to tertiary winding TW. Current for forward biasing of transistor Q1 flows from tertiary winding TW along a path which includes resistor R4, the base-emitter junction of transistor Q1, the collector-emitter path of transistor Q5, resistor R6 and diode D7 before returning to tertiary winding TW. In other words, current for forward biasing by the transistor Q1 or Q2 always flows through resistor R6. By controlling the current flowing through resistor R6, capacitors C2 and C3 control the forward base drive of transistors Q1 and Q2, respectively. The average voltage across capacitors C2 and C3 is maintained at a relatively constant value during steady-state operation of lamp load 600.

Of particular importance are the two self- correcting feedback circuits for maintaining transistors Q1 and Q2 in relatively lightly saturated, conductive states. The discharge paths of capacitors C2 and C3 serve as respective feedback circuits. The first feedback path (i.e. discharge path of capacitor C3) includes the collector-base junction and therefore the minority carrier charge stored in a collector of transistor Q1. When more or less current flows into the base of transistor Q1 during a push-pull cycle, the amount of minority carrier charge stored in the collector of transistor Q1 varies. During discharge of capacitor C3 such variation in stored minority carrier charge of collector Q1 is reflected in the level to which capacitor C3 discharges. For example, when transistor Q1 is temporarily driven into deep saturation due to a reduction in power consumed by lamp load 600, the minority carrier charge of the collector of transistor Q1 increases thereby lowering the level of voltage to which capacitor C3 discharges. When the power consumed by lamp load 600 increases, the minority carrier charge stored in the collector of transistor Q1 decreases thereby raising the voltage level to which capacitor C3 discharges.

Similarly, the voltage across capacitor C2 following discharge reflects changes in the amount of minority carrier charge stored in the collector of transistor Q2 based on variations in power consumption of lamp load 600. When transistor Q2 is temporarily driven into deep saturation due to a reduction in power consumed by lamp load 600, the minority carrier charge of the collector of transistor Q2 increases thereby lowering the level of voltage to which capacitor C2 discharges. When the power consumed by lamp load 600 increases, the minority carrier charge in the collector of transistor Q2 decreases thereby raising the voltage level to its capacitor C2 discharges.

Transistor Q8 limits the current flowing through resistor R6 during the separate charging of capacitors C2 and C3. When the voltage across resistor R6 is sufficient to turn ON transistor Q8, a portion of the current flowing into the base of transistor Q5 is now diverted through the collector-emitter path of transistor Q8 into the junction joining the anode of diodes D6 and D7 and resistor R6 together. By limiting the flow of current into the base of transistor Q5, the emitter current of transistor Q5 during forward biasing of transistors Q1 and Q2 is limited to a predetermined level.

The voltage across resistor R6 is designed to be greater than the voltage across resistor R5 during forward biasing of transistor Q2 and to be greater than the voltage across resistor R4 during forward biasing of transistor Q1. The voltage developed across resistor R6 is limited by transistor Q8 (i.e. limited by the level of transistor Q5 emitter current) so that the voltage developed across resistor R5 during charging of capacitor C2 is insufficient to turn ON transistor Q4. By preventing transistor Q4 from being turned ON, discharging of capacitor C3 during charging of capacitor C2 is prevented. Similarly, the voltage developed across resistor R4 during charging of capacitor C3 is insufficient to turn ON transistor Q3. Discharge of capacitor C2 during charging of capacitor C3 is therefore prevented.

By preventing capacitor C2 from discharging while capacitor C3 is being charged, transistor Q8 serves to stabilize oscillator operation. That is, transistor Q8 prevents the untimely discharge of capacitor C3 imposing a very low voltage across resistor R6 resulting in a level of transistor Q1 forward base current being too low to turn ON transistor Q1. There is no change in the voltage across capacitor C2 during charging and discharging of capacitor C3. Transistor Q8 also prevents capacitor C3 from discharging whi le capacitor C2 is being charged and therefore serves to stabilize oscillator operation during the charging of capacitor C2. That is, transistor Q8 prevents the untimely discharge of capacitor C2 imposing a very low voltage across resistor R6 resulting in a level of transistor Q2 forward base current being too low to turn ON transistor Q2. There is no change in the voltage across capacitor C3 during charging and discharging of capacitor C2. Transistor Q8 can also be viewed as diverting the flow of current away from capacitors C2 and C3 during charging of these capacitors.

Resistor R9 serves to control the shape of the voltage waveform across resistor R6 to permit transistors Q1 and Q2 to be driven into deeper saturation (i.e. smaller emitter-collector voltage drop) so as to decrease transistor conduction losses.

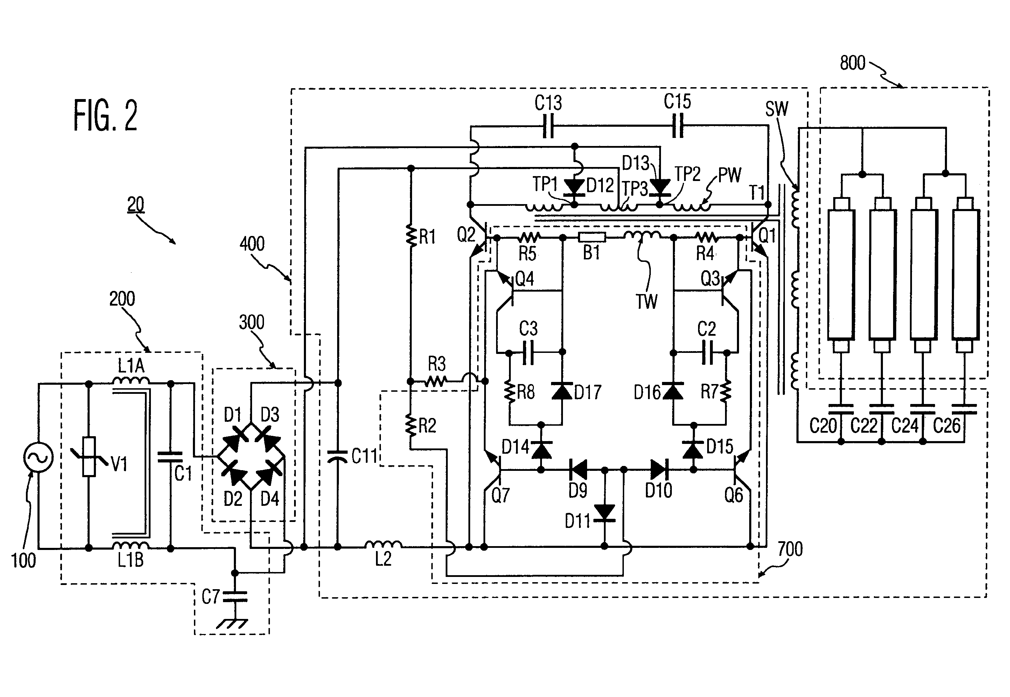

In accordance with an alternative embodiment of the invention, a ballast 20, as shown in Fig. 2, is similar in construction and operation to ballast 10 of Fig. 1. Those elements of ballasts 10 and 20 of similar construction and operating in a similar manner have been identified by like reference numerals and will not be further discussed herein. The differences between ballast 20 and ballast 10 relate to the protection of transistors Q1 and Q2 and the discharge (feedback) and charging paths of capacitors C2 and C3.

Base driving circuit 700 of ballast 20 includes resistor R2 connected to the anodes of diodes D9, D10 and D11. The cathode of diode D11 is connected to the junction joining one end of inductor L2, the collectors of a pair of bipolar NPN transistors Q6 and Q7 and the emitters of transistors Q1 and Q2 together. The cathode of diode D9 is connected to the anode of a diode D14 and the base of transistor Q7. The cathode of diode D10 is connected to the anode of a diode D15 and the base of transistor Q6. The emitter of transistor Q7 is connected to the junction joining the base of transistor Q2, resistors R3 and R5 and the emitter of transistor Q4 together. The emitter of transistor Q6 is connected to the emitter of transistor Q3, the base of transistor Q1 and one end of resistor R4.

The cathode of diode D14 is connected to one end of a resistor R8 and the anode of a diode D17. The other end of resistor R8 is connected to one end of capacitor C3 and the collector of transistor Q4. The cathode of diode of D17 is connected to the junction joining capacitor C3, the base of transistor Q4, resistor R5 and a ferrite bead B1 together. The other end of ferrite bead B1 is connected to one end of tertiary winding TW.

The cathode of diode D15 is connected to the anode of diode D16 and one end of a resistor R7. The cathode of diode D16 is connected to the junction joining capacitor C2, the base of transistor Q3, tertiary winding TW and resistor R4 together. The other end of resistor R7 is connected to the junction joining capacitor C2 and the collector of transistor Q3 together.

Resistors R2, R4, R5, R7 and R8, diodes D9, D10, D11, D14, D15, D16 and D17, capacitors C2 and C3, transistors Q3, Q4, Q6 and Q7, ferrite bead B1 and tertiary winding TW in combination serve as a base drive circuit 700 for switching ON and OFF transistors Q1 and Q2.

Aside from base drive circuit 700, ballast 20 also differs from ballast 10 in that the junction joining the anodes of diodes D2 and D4 and inductor L2 together is also connected through a pair of diodes D12 and D13 to a pair of taps TP1 and TP2 of primary winding PW, respectively. Ballast 20 is capable of powering a lamp load 800 which includes fluorescent lamps LL1, LL2, LL3 and LL4. Ballast 20 includes capacitors C20, C22, C24 and C26 for ballasting lamps LL1, LL2, LL3 and LL4, respectively.

Operation of ballast 20 is substantially the same as previously described with respect to ballast 10 in that capacitors C2 and C3 provide reference voltages for establishing (controlling) the forward base current supplied to transistors Q2 and Q1, respectively. Current for charging capacitor C3 flows from capacitor C11 through resistors R1 and R2, diodes D9 and D14, resistor R8, capacitor C3, ferrite bead B1, tertiary winding TW, resistor R4, base-emitter junction of transistor Q1 and inductor L2 before returning to capacitor C11. Current for charging capacitor C2 flows from capacitor C11 through resistors R1 and R2, diodes D10 and D15, resistor R7, capacitor C2, tertiary winding TW, ferrite bead B1, resistor R5, base-emitter junction of transistor Q2 and inductor L2 before returning to capacitor C11.

The discharge (feedback) path of capacitor C3 includes the loop formed by capacitor C3, emitter-collector path of transistor Q4, base-collector junction of transistor Q2, primary winding PW, collector-base junction of transistor Q1, resistor R4, tertiary winding TW and ferrite bead B1. The discharge (feedback) path of capacitor C2 includes the loop formed by capacitor C2, collector-emitter path of transistor Q3, base-collector junction of transistor Q1, primary winding PW, collector-base junction of transistor Q2, resistor R5, ferrite bead B1 and tertiary winding TW.

Ballast 20 eliminates the need for resistor R6 of ballast 10 by now having capacitors C2 and C3 control the voltages across resistors R4 and R5, respectively. In other words, resistors R4 and R5 now each serve two purposes. Similar to ballast 10, resistors R4 and R5 determine when to turn ON transistors Q3 and Q4 for initiating discharge of capacitors C2 and C3 for purposes of feedback as discussed above, respectively. Additionally, resistors R4 and R5 are also used to determine the level of forward base current for transistors Q2 and Q1 by capacitor C2/resistor R7 and capacitor C3/resistor R8 controlling the voltages developed across resistors R4 and R5, respectively.

The forward base current flowing into the base of transistor Q1 also flows through and is determined based on the voltage developed across resistor R5. The voltage developed across resistor R5 is designed to be substantially equal to the voltage across the series combination of resistor R8 and capacitor C3. The forward base current flowing into transistor Q2 also flows through and is determined based on the voltage developed across resistor R4. The voltage developed across resistor R4 is designed to be substantially equal to the voltage across the series combination of resistor R7 and capacitor C2.

By including resistor R8, the shape of the voltage waveform developed across resistor R5 also can be changed to permit transistor Q1 to be driven into deeper saturation (i.e. smaller emitter-collector voltage drop) so as to decrease conduction loss of transistor Q1. Similarly, resistor R7 also serves to reshape the voltage waveform developed across resistor R4 to permit transistor Q2 to be driven into deeper saturation so as to reduce conduction loss of transistor Q2. As can readily be appreciated, in an alternative embodiment of the invention resistors R7 and R8 can be short-circuited provided higher conduction losses can be tolerated.

Ballast 20 unlike ballast 10 also includes ferrite bead B1, that is, an inductor. Ferrite bead B1 serves to increase the rise time of the current spike created by the flow of reverse base current of transistor Q1 or Q2 flowing through tertiary winding TW. The increased rise time permits removal more efficiently of minority carriers stored in the collector of the transistor (i.e. Q1 or Q2) which is being turned OFF. There are therefore less switching losses in the collector when the transistor is turned OFF.

Diode D17 limits the voltage across the series combination of capacitor C3 and resistor R8 during charging and discharging of capacitor C3. The voltage across diode D17 is designed to be equal to the voltage across resistor R4. Since the voltage across resistor R4 is limited to the threshold voltage of diode D17, the voltage developed across resistor R4 during charging and discharging of capacitor C3 is insufficient to turn ON transistor Q3 and thereby permit discharge of capacitor C2. In other words, diode D17 prevents capacitor C2 from discharging when capacitor C3 is being charged and therefore serves to stabilize oscillator operation (i.e. prevent the push-pull oscilla- torfrom being turned OFF). There is no change in the voltage across capacitor C2 during charging and discharging of capacitor C3, that is, the voltage across capacitor C2 is maintained at the same level during its idling state.

Diode D16, similartodiode D17, prevents capacitor C3 from discharging when capacitor C2 is being charged. More particularly, the voltage across capacitor C2 and resistor R7 is limited to the threshold voltage of diode D16 during charging of capacitor C2. The voltage across resistor R5 is designed to be equal to the voltage across diode D16 and therefore can never exceed the threshold voltage of diode D16 when capacitor C2 is being charged. Therefore, when capacitor C2 is being charged, transistor Q4 cannot be turned ON and therefore prevents discharge of capacitor C3. In other words, capacitor C3 is prevented from discharging when capacitor C2 is being charged and therefore serves to stabilize oscillator operation (i.e. prevents oscillator from being turned OFF). There is no change in the voltage across capacitor C3 during charging and discharging of capacitor C2, that is, the voltage across capacitor C2 is maintained at the same level during its idling state.

The source of current for forward biasing transistor Q1 is produced by tertiary (base) winding TW. The path of forward base current for transistor Q1 flows from tertiary winding TW through resistor R4 through the base-emitter junction of transistor Q1, the collector-emitter path of transistor Q7, resistor R5 and ferrite bead B1 before returning to tertiary winding TW. The forward base current for transistor Q2, which is also produced by tertiary TW, flows from tertiary winding TW through ferrite bead B1, resistor R5, base-emitter junction of transistor Q2, collector-emitter path of transistor Q6 and resistor R4 before returning to tertiary winding TW.

Diode D12 will turn ON when the voltage developed between taps TP1 and TP3 of primary winding PW exceeds the voltage across capacitor C11. Similarly, diode D13 will turn ON when the voltage between taps TP2 and TP3 is greater than the voltage across capacitor C11. Consequently, the magnetizing current of primary winding PW is diverted to capacitor C11 whenever the voltage difference between the collectors of transistors Q1 and Q2 exceeds a predetermined level. Any undesired voltages (e.g. voltage spikes) which appear across primary winding PW are diverted from transistors Q1 and Q2 thereby protecting these transistors.

In accordance with yet another alternative embodiment of the invention, resistor R2 can be short-circuited, diode D11 can be open circuited and diodes D9 and D10 can be replaced with a corresponding pair of resistors in order to reduce the number of components and particularly the number of diodes required. As can also be readily appreciated, the source for biasing transistors Q6 and Q7 need not be derived from the junction formed by capacitor C11 and the cathodes of diodes D1 and D3. For example, biasing of transistors Q6 and Q7 can be provided from the junction between the collectors of transistors Q6 and Q7 or from a tap of inductor L2.

As now can be readily appreciated, ballast 10 and ballast 20 each provide two discharge/feedback paths which are independent of one another. Transistors Q1 and Q2 need not have the same characteristics, such as, but not limited to, current gain, storage time or saturation voltage.

Unlike conventional base driving schemes in which high switching losses can occur during no load conditions, the present invention by sensing changes in the minority carrier charge stored in the collectors of the power transistors avoids deep saturation of the power transistors. Switching losses during no load conditions are therefore minimized.

Power losses associated with transistors Q1 and Q2 regardless of load conditions are minimized. Base drive circuits 500 and 700 can accommodate a wide range of input voltages while maintaining lossless operation with minimum loss of power during switching of transistors Q1 and Q2. Ballasts 10 and 20 substantially eliminate overshoot of tank voltage when the resonant tank is turned ON. The need for a Baker clamp (and the relatively high power losses accompanying the Baker clamp) is eliminated by base drive circuits 500 and 700. Losses in base drive circuits 500 and 700 are relatively lower than in a conventional base driving scheme inasmuch as the level of current required to drive the power transistors is maintained at a relatively lower level.

Base drive circuits 500 and 700 also do not employ a proportional driving scheme, that is, maintaining a constant, forced current gain for the power transistors. The forced current gain of transistor Q1 and/or Q2 can vary based on and to accommodate variations in lamp load 600 or 800 and/or transistor characteristics.

The base driving scheme in accordance with the present invention provides base current to individual power switching bipolar transistors. The amount of forward base drive is dependent on lamp load 600 or 800. In other words, the switching characteristics vary based on lamp load 600 or 800 in response to detection of lightly saturated conditions of transistors Q1 and Q2. Detection of such lightly saturated conditions is based on detection of a signal representing the storage of collector minority carriers in eithertran- sistor Q1 or Q2. This signal flows within the feedback path during discharge of the associated reference capacitor (i.e. capacitor C2 or C3).

The base driving scheme in accordance with the invention therefore results in switching of bipolartran- sistors much more quickly by reducing the amount of stored minority carriers within the power transistors. Advantageously, the switching times of the bipolar transistors approach the switching times of a field effect transistor (FET).

It will thus been seen that the objects set forth above, among those made apparent from the preceding description, are efficiently attained and since certain changes may be made in the above constructions without departing from the spirit and scope of the invention, it is intended that all matter contained in the above description and shown in the accompanying drawings shall be interpreted as illustrative and not in a limiting sense.

It is also to be understood that the following claims are intended to cover all of the generic and specific features of the invention herein described, and all statements of the scope of the invention which, as a matter of language, might be said to fall therebetween.

## Claims

1. A driving circuit for one or more bipolar transistors, each transistor having a base and a minority carrier charge, comprising:
reference voltage means for producing a reference voltage associated with each transistor;
current supply means for supplying current to the base of each transistor based on the associated reference voltage; and
feedback means associated with each transistor for varying the reference voltage associated with that transistor based on the minority carrier charge stored in the latter.

2. The driving circuit of claim 1, wherein the reference voltage means includes a storage device for each of the transistors, the voltage across each storage device serving as the reference voltage for the associated transistor.

3. The driving circuit of claim 2, wherein a capacitor serves as the storage device.

4. The driving circuit of claim 1, 2 or 3, wherein the feedback means includes switching means associated with each transistor responsive to the conductive state of that transistor for controlling when a change in the associated reference voltage occurs.

5. Driving circuit according to claim 3 and 4, wherein the switching means and capacitor associated with each transistor are coupled.

6. Driving circuit according to any of the previous claims, wherein the current supply means includes current control means for controlling the level of current supplied to the base of each transistor.

7. Driving circuit according to any of the previous claims, wherein the level of current supplied to the base of each transistor by said current supply means is proportional to the associated reference voltage.

8. Driving circuit according to any of the previous claims, further including stabilizing means associated with each transistor for limiting variation to only one reference voltage at any instant in time.

9. The driving circuit of claim 8, wherein the stabilizing means is further operable for diverting the flow of current away from the reference voltage means and includes a semiconductor device.

10. Ballast inverter, comprising a bipolar transistor and a driving circuit according to one or more of the previous claims, coupled to said bipolar transistor.
